# EUROPEAN PATENT APPLICATION

(11) **EP 4 524 629 A1**
(43) Date of publication of application: **19.03.2025**
(21) Application number: 23826006.1
(22) Date of filing: 11.05.2023
(51) Int. Cl.: G02B 6/42

(54) **OPTICAL DEVICE, OPTICAL COMMUNICATION APPARATUS AND OPTICAL SWITCHING SYSTEM**

(30) Priority: 22.06.2022 CN 202210712064
(71) Applicant: Huawei Technologies Co., Ltd., Shenzhen, Guangdong 518129 (CN)
(72) Inventor: GUO, Zhengwei, Shenzhen, Guangdong 518129 (CN); WANG, Biao, Shenzhen, Guangdong 518129 (CN); PAN, Zhongling, Shenzhen, Guangdong 518129 (CN); LIU, Heliang, Shenzhen, Guangdong 518129 (CN)
(74) Representative: Goddar, Heinz J.
(86) International application number: PCT/CN2023/093408
(87) International publication number: WO 2023/246356

(57) **Abstract**

This application provides an optical device, an optical communication device, and an optical switching system. The optical device includes a box body, an upper cover, and an optical substrate and an optical element that are located inside the box body. The optical substrate has an opening that penetrates a thickness direction, and the optical element is fastened to an inner wall of the opening. In this embodiment of this application, the opening that penetrates the thickness direction is disposed in the optical substrate, and the optical element is fastened to the inner wall of the opening. In comparison with disposing the optical element on an upper surface of the optical substrate, a total thickness of the optical device can be greatly reduced, and an integration level of the optical device can be improved. In addition, the optical element is fastened to the inner wall of the opening, so that impact of deformation of the optical substrate on an optical path formed by the optical element can be reduced, and machining precision of the optical substrate can also be reduced, thereby reducing manufacturing costs of the optical substrate.

## Description

### CROSS-REFERENCE TO RELATED APPLICATIONS

This application claims priority to Chinese Patent Application No. 202210712064.9, filed with the China National Intellectual Property Administration on June 22, 2022 and entitled "OPTICAL DEVICE, OPTICAL COMMUNICATION DEVICE, AND OPTICAL SWITCHING SYSTEM", which is incorporated herein by reference in its entirety.

### TECHNICAL FIELD

This application relates to the field of optical communication technologies, and in particular, to an optical device, an optical communication device, and an optical switching system.

### BACKGROUND

With the continuous development of optical communication technologies, optical communication devices are widely applied and developed, and the optical communication devices gradually develop towards miniaturization and high integration. In an optical communication device, an optical substrate is used to carry an optical element in an optical device, to implement high-precision optical path coupling.

In a conventional technology, the optical element is usually disposed on an upper surface of the optical substrate, resulting in a large thickness and low integration of the optical device.

### SUMMARY

Embodiments of this application provide an optical device, an optical communication device, and an optical switching system, to resolve a problem that an optical device has a large thickness and low integration.

According to a first aspect, an embodiment of this application provides an optical device. The optical device provided in this embodiment of this application may include a box body, an upper cover, and an optical substrate and an optical element that are located inside the box body. The optical substrate has an opening that penetrates a thickness direction, and the optical element is fastened to an inner wall of the opening.

In the optical device provided in this embodiment of this application, the opening that penetrates the thickness direction is disposed in the optical substrate, and the optical element is fastened to the inner wall of the opening. In comparison with disposing the optical element on an upper surface of the optical substrate, a total thickness of the optical device can be greatly reduced, and an integration level of the optical device can be improved. In addition, the optical element is fastened to the inner wall of the opening, so that impact of deformation of the optical substrate on an optical path formed by the optical element can be reduced, and machining precision of the optical substrate can also be reduced, thereby reducing manufacturing costs of the optical substrate.

In a conventional technology, the optical element is usually disposed on the upper surface of the optical substrate. In this way, a total thickness of the optical substrate and the optical element is a sum of a thickness of the optical substrate and a height of the optical element. Consequently, the total thickness of the optical device is large. In this embodiment of this application, the optical element is fastened to the inner wall of the opening of the optical substrate, and both the upper surface and a lower surface of the optical substrate are not provided with the optical element. In this way, the total thickness of the optical substrate and the optical element can be the thickness of the optical substrate or the height of the optical element. Therefore, in comparison with the conventional technology in which the optical element is disposed on the upper surface of the optical substrate, height space inside the optical device can be reduced, and the total thickness of the optical device is greatly reduced. For example, the total thickness of the optical device may be reduced to be less than 18 mm.

During specific implementation, a side surface of the optical element may be attached to the inner wall of the opening by using glue. Certainly, the optical element may alternatively be fastened in another manner. This is not limited herein. The optical element is fastened to the inner wall of the opening of the optical substrate, so that light can be transmitted in the opening of the optical substrate, and a loss of the light is small. In addition, deformation of the optical substrate has small impact on the light, so that an optical path with high precision can be formed in the optical device. In actual application, the inner wall of the opening Q may be provided with one or more optical elements, and a quantity, shapes, sizes, or the like of optical elements may be set based on an actual requirement. During specific implementation, the shape and a size of the opening Q may be set based on an actual optical path requirement. This is not limited herein.

Optionally, a material of the optical substrate includes but is not limited to an aluminum silicon carbide (AlSiC) composite material, an aluminum nitride (AlN) ceramic, an aluminum oxide ceramic, a kovar (Kovar) alloy, an Invar (invar) alloy, or the like.

In a possible implementation, the optical substrate and the box body may be disposed separately. That is, both the optical substrate and the optical element are located inside the box body. In this way, deformation caused by an external force on the optical substrate can be reduced, and an optical path formed by the optical element is prevented from being affected by an external factor.

In a possible implementation, the thickness of the optical substrate may be less than or equal to the height of the optical element in the thickness direction of the optical substrate. In this way, space of the inner wall of the opening can be fully used, so that an integration level of the optical device is high. Certainly, the thickness of the optical substrate may alternatively be greater than a maximum height of the optical element in the thickness direction of the optical substrate. This is not limited herein.

To further reduce the impact of the external factor on the optical path, the side surface of the optical substrate may be provided with a buffer member. The buffer member may be supported between the optical substrate and an inner wall of the box body, to perform a buffer function. In this way, an external factor, for example, a change of an atmospheric pressure or vibration does not cause an optical path offset on the optical substrate. The buffer member is disposed on the side surface of the optical substrate, and the upper surface and a lower surface of the optical substrate are not provided with the buffer member. Therefore, the buffer member does not occupy thick space, and the thickness of the optical device can be further reduced. During specific implementation, the buffer member may include a silicone pad. Certainly, the buffer member may alternatively use another material having a buffer function. This is not limited herein.

To achieve good buffering effect, two opposite side surfaces of the optical substrate may be provided with buffer members. For example, two opposite side surfaces that are of the optical substrate and that have relatively small areas may be provided with the buffer members. For example, each of the two side surfaces may be provided with at least two buffer members. Certainly, one, three, or more side surfaces of the optical substrate each may be provided with a buffer member, or one side surface may be provided with one, three, or more buffer members. A position of the buffer member and a quantity of buffer members may be disposed based on an actual requirement. This is not limited herein.

In another possible implementation, the box body may include a side wall and a bottom cover. The optical substrate and the side wall of the box body are of an integrated structure, that is, an outer wall of the optical substrate is multiplexed as the side wall of the box body. The optical substrate is glued to the bottom cover of the box body, and the optical substrate is glued to the upper cover, so that a hermetic packaged optical device can be obtained. In a manufacturing process, the optical substrate and the side wall of the box body may be manufactured by using a same processing process and a same material, or another component in the optical device may be disposed in the opening of the optical substrate, and the upper cover and the bottom cover are glued on two sides of the optical substrate, so that the hermetic packaged optical device can be formed. The optical substrate and the side wall of the box body are of an integrated structure. This can further reduce the total thickness of the optical device, improve the integration level of the optical device, and reduce production costs of the optical device.

During specific implementation, a height of the side wall of the box body in the thickness direction of the optical substrate is greater than the thickness of the optical substrate. A surface of a side that is of the optical substrate and that is close to the upper cover and the side wall may form a first concave structure, and the upper cover may be embedded in the first concave structure. In this way, after the optical substrate is glued with the upper cover, a surface of the upper cover may be flush with an edge of the side wall, so that the upper surface of the optical device is an approximately flat surface. This improves the integration level of the optical device. In addition/Alternatively, a surface of a side that is of the optical substrate and that is close to the bottom cover and the side wall form a second concave structure, and the bottom cover is embedded in the second concave structure. In this way, after the optical substrate is glued with the bottom cover, a surface of the bottom cover may be flush with an edge of the side wall, so that the lower surface of the optical device is an approximately flat surface. This improves the integration level of the optical device. In other words, only a surface of one side of the optical substrate may be provided with a concave structure, and the upper cover or the bottom cover is embedded in the concave structure; or both surfaces of two sides of the optical substrate may be provided with concave structures, and the upper cover and the bottom cover are respectively embedded in the concave structures. Disposing may be performed based on an actual requirement. This is not limited herein.

During specific implementation, the thickness of the optical substrate may be greater than or equal to the maximum height of the optical element in the thickness direction of the optical substrate. In this way, the optical element may not exceed the upper surface and the lower surface of the optical substrate, so that the optical substrate is more easily glued to the upper cover and the bottom cover. For example, a plate-like upper cover and a plate-like bottom cover may be used. Certainly, in some scenarios, a height of the optical element may alternatively be greater than the thickness of the optical substrate. The upper cover and/or the bottom cover may be disposed in a hemispherical shape or the like, to accommodate the optical element that exceeds a surface of the optical substrate. A side surface of the optical substrate may also be provided with the buffer member, and the buffer member has a buffer function. In this way, the optical device is installed in the optical communication device, so that impact of another component in the optical communication device on the optical path of the optical substrate can be prevented.

To implement an optical signal transmission function and an electrical signal transmission function, the optical device provided in embodiments of this application may further include an optical signal pass-through structure and an electrical signal pass-through structure. The side wall of the box body is provided with a first via and a second via that pass through the box body, the optical signal pass-through structure passes through the first via, and the electrical signal pass-through structure passes through the second via. To enable a component, for example, the optical element, in the optical device to work in an environment with stable moisture and gas density, the box body and the upper cover, the optical signal pass-through structure and the first via, and the electrical signal pass-through structure and the second via need to be separately sealed, to implement hermetic packaging of the optical device.

During specific implementation, the box body and the upper cover may be glued and sealed by using an adhesive, the optical signal pass-through structure and the box body may be glued and sealed by using an adhesive, and the electrical signal pass-through structure and the box body may be glued and sealed by using an adhesive. A material of the adhesive may include epoxy resin. Certainly, the adhesive may alternatively use another material. This is not limited herein. For ease of differentiation, in embodiments of this application, the adhesive for sealing the box body and the upper cover is referred to as a first adhesive, the adhesive for sealing optical signal pass-through structure and the box body is referred to as a second adhesive, and the adhesive for sealing the electrical signal pass-through structure and the box body is referred to as a third adhesive.

To prevent the adhesive from aging, the optical device may further include a protective film covering at least a part of the adhesive. The protective film may be a vacuum coating film made of an organic material or an inorganic material. For example, the protective film may be made by using a plasma enhanced chemical vapor deposition (PECVD) process. A material of the protective film may be a highly compact organic or inorganic polymer. For example, the material of the protective film may be a non-metal material, for example, parylene (Parylene). Certainly, the material of the protective film may alternatively be a metal material. This is not limited herein.

To make moisture content inside the optical device relatively stable, a desiccant G may be disposed inside the box body, and the desiccant G may absorb water molecules, to perform a dehumidification function. A quantity of desiccants G is legitimately set, so that the moisture content inside the optical device may be relatively stable. In this embodiment of this application, hermetic packaging is performed on the optical device by using an adhesive, and the desiccant is disposed in the box body, so that the optical device can meet an industry standard of keeping moisture less than 5000 ppm within years.

The optical device in this embodiment of this application may further include a first sensor located inside the box body and a second sensor located outside the box body. The first sensor is configured to detect a temperature, humidity, and atmospheric pressure inside the box body, and output a first detection signal. The second sensor is configured to detect a temperature, humidity, and atmospheric pressure outside the box body, and output a second detection signal. By disposing the first sensor and the second sensor, the temperature, the humidity, and the atmospheric pressure inside and outside the box body may be monitored in real time. During specific implementation, a processor may be disposed inside or outside the box body. The processor may receive the first detection signal and the second detection signal, determine and output a life model curve based on the first detection signal and the second detection signal, and subsequently display, onto an external display device, the life model curve or life warning information obtained based on the life model curve, so that a user can learn a usage status of the optical device based on the display device, and monitor a life of the optical device in real time, for example, learn the life warning information at least 20 months in advance. In this way, reliability of the optical device is improved. In addition, operations such as electric control drying, moisture elimination, frequency compensation, or wavelength deviation may be performed based on the temperature, the humidity, and the atmospheric pressure inside and outside the box body, to make performance of the optical device stable.

In this embodiment of this application, the box body and the upper cover may be glued and sealed by using the first adhesive. In a possible implementation, the side wall and the bottom cover of the box body may be of an integrated structure. In another possible implementation, the side wall and the bottom cover of the box body may be disposed separately, and the side wall and the bottom cover of the box body may be glued and sealed by using an adhesive. Because requirements of a gluing and sealing process on the box body and the upper cover are low, each of the box body and the upper cover may be made of a low-cost material. For example, each of the box body and the upper cover may be made of a metal material, for example, stainless steel or aluminum, or each of the box body and the upper cover may be made of a non-metal material, for example, plastic. In addition, costs of the gluing and sealing process are low. Therefore, material costs and process costs of the optical device can be greatly reduced. In addition, each of a glued connection position between the box body and the upper cover and a position at which the first adhesive is exposed is provided with a protective film. The protective film protects the first adhesive, so that the first adhesive can be prevented from aging, reliability of the first adhesive can be improved, and the optical device can implement a moisture transmission rate less than 5 g/m²/day when a temperature is 50° and relative humidity is 100%, where g represents gram, and m represents meter, day represents day.

In a possible implementation, the optical signal pass-through structure may include a connection tube and an optical fiber that passes through the connection tube. The connection tube passes through the first via. The box body is provided with a groove at a position corresponding to the first via, and the groove surrounds the first via. In addition, the groove is located on the inner wall and/or the outer wall of the box body. If no groove is disposed around the first via, a stress of the box body is directly applied to the connection tube, and the optical fiber in the connection tube is easily damaged. In this embodiment of this application, the groove surrounding the first via is disposed, so that the stress of the box body can be prevented from directly applying to the connection tube. This avoids damage to the optical fiber in the connection tube due to an excessively large stress.

In actual application, a part of the connection tube is located inside the first via, the other part is located inside the box body, and the part of the connection tube located inside the box body is provided with a hole. In a high temperature process, the optical fiber inside the connection tube is damaged due to a tensile stress. This easily causes the optical fiber to be broken. In this embodiment of this application, the hole is disposed on the part that is of the connection tube and that is located inside the box body, so that the tensile stress of the optical fiber inside the connection tube can be reduced, a risk of optical fiber break is reduced, and reliability of the optical signal pass-through structure is improved.

The optical fiber may include a bare fiber and a coating layer. The optical fiber has a bare fiber area and a coating area, a position of the bare fiber area corresponds to a position of the hole, the coating layer wraps the bare fiber in the coating area, and the bare fiber in the bare fiber area is not wrapped by the coating layer. That is, the optical fiber in the bare fiber area is a bare fiber, and the optical fiber in the coating area is a non-bare fiber. The optical signal pass-through structure may further include a filling portion. The filling portion is filled between the optical fiber and the connection tube, and the filling portion wraps the bare fiber area and a part that is of the optical fiber and that is in the coating area B adjacent to the bare fiber area.

In actual application, the coating layer in the optical fiber may transmit moisture. To avoid a case in which hermetic packaging effect of the optical device is affected because the coating layer transmits moisture to the inside of the box body through the hole, in embodiments of this application, the bare fiber area is disposed at the corresponding position of the hole, and the optical fiber in the bare fiber area is not wrapped by the coating layer, so that the coating layer is partitioned in the bare fiber area. Therefore, a moisture transmission path of the coating layer can be isolated. In addition, the filling portion filled between the optical fiber and the connection tube is disposed, so that the filling portion wraps the bare fiber area of the optical fiber, and the filling portion wraps a part that is of the optical fiber and that is in the coating area adjacent to two sides of the bare fiber area. In this way, a path for transmitting moisture by the coating layer to the box body through the hole can be blocked, and hermetic packaging effect of the optical device is effectively improved. In other words, the optical signal pass-through structure in embodiments of this application can reduce the tensile stress of the optical fiber in the connection tube and improve reliability of the optical signal pass-through structure without affecting hermetic packaging effect of the optical device. During specific implementation, the filling portion may include solder or glue. Certainly, the filling portion may alternatively use another material that has a function of blocking moisture. This is not limited herein. In addition, to fix the filling portion at the hole, a high-temperature tape may be attached to a position that is on an outer side of the connection tube and that corresponds to the hole.

To achieve better hermetic packaging effect of the optical device, a length of the bare fiber area in an extension direction of the optical fiber may be set to be greater than a length of the hole in the extension direction of the optical fiber. In this way, a length of the coating layer is long, and a distance between a cross section of the coating layer and the hole P is longer, so that the coating layer is more difficult to transmit moisture to the inside of the box body through the hole. To enable the optical signal pass-through structure to have good effect of blocking moisture, the length of the bare fiber area in the extension direction of the optical fiber may be set to be greater than 8 mm. The length of the bare fiber area in the extension direction of the optical fiber is set to be at least 2 mm greater than the length of the hole in the extension direction of the optical fiber. Certainly, during specific implementation, the length of the bare fiber area in the extension direction of the optical fiber may alternatively be equal to or slightly less than the length of the hole in the extension direction of the optical fiber. This is not limited herein.

During specific implementation, a shape of the hole in the connection tube may be set based on an actual requirement. For example, the shape of the hole may alternatively be rectangular, round, oval, or square. Alternatively, a quantity of holes in the connection tube may be set based on an actual requirement. For example, the quantity of holes may be one, two, or more. The shape of the hole and the quantity of holes in the connection tube are not limited herein.

Based on a similar principle, to reduce a tensile stress of an optical fiber inside the connection tube, the connection tube may be partially thinned, so that the connection tube has a thinning area located inside the box body, and a diameter of the connection tube in the thinning area is less than a diameter of the connection tube in another area other than the thinning area. The optical fiber includes a bare fiber and a coating layer. The optical fiber has a bare fiber area and a coating area, a position of the bare fiber area corresponds to a position of the thinning area, the coating layer wraps the bare fiber in the coating area, and the bare fiber in the bare fiber area is not wrapped by the coating layer. The optical signal pass-through structure may further include a filling portion. The filling portion is filled between the optical fiber and the connection tube, and the filling portion wraps the bare fiber area and a part that is of the optical fiber and that is in the coating area adjacent to the bare fiber area. In this embodiment of this application, the optical signal pass-through structure is provided with the thinning area, so that the tensile stress of the optical fiber in the connection tube can be reduced and reliability of the optical signal pass-through structure can be improved without affecting hermetic packaging effect of the optical device. A specific principle is similar to a principle in the foregoing embodiment. Details are not described again.

In this embodiment of this application, the optical signal pass-through structure may be a single-tube structure. That is, the optical signal pass-through structure may include only one connection tube. Alternatively, the optical signal pass-through structure in this embodiment of this application may be a dual-tube structure. That is, the optical signal pass-through structure may include two connection tubes, and the two connection tubes in the optical signal pass-through structure may be of an integrated structure. Alternatively, the optical signal pass-through structure in this embodiment of this application may be of a multi-tube integrated structure. That is, the optical signal pass-through structure may include at least three connection tubes, and the connection tubes in the optical signal pass-through structure may be of an integrated structure. During specific implementation, a quantity of connection tubes in the optical signal pass-through structure may be set based on an actual requirement. This is not limited herein.

In this embodiment of this application, the optical signal pass-through structure and the box body are glued and sealed by using the second adhesive. The second adhesive may be disposed inside the box body, the second adhesive wraps a part of the optical signal pass-through structure that is located inside the box body and that is close to the box body, and the second adhesive is bonded to the inner wall of the box body. Because content of moisture inside the box body is low, the second adhesive inside the box body is not easy to age. Therefore, the second adhesive is disposed inside the box body, so that gluing and sealing effect is better, and reliability of the optical device is high. To achieve better gluing and sealing effect, the second adhesive may also be disposed outside the box body and/or inside the first via.

Because a gluing and sealing process has a low requirement on the connection tube, the connection tube may be made of a low-cost material. For example, the connection tube may be made of a low-cost metal material, for example, copper. In addition, costs of the gluing and sealing process are low, so that material costs and process costs of the optical device can be greatly reduced. In addition, each of a glued connection position between the optical signal pass-through structure and the box body and a position at which the second adhesive is exposed is provided with a protective film. The protective film protects the second adhesive, so that aging of the second adhesive can be avoided, and reliability of the second adhesive can be improved. In this way, the optical device can implement a moisture transmission rate less than 5 g/m²/day when a temperature is 50°C and relative humidity is 100%, where g represents gram, m represents meter, and day represents day.

In some embodiments of this application, the electrical signal pass-through structure passes through the second via, the electrical signal pass-through structure may be electrically connected to a chip inside the box body, and the electrical signal pass-through structure and the box body are glued and sealed by using a third adhesive. The electrical signal pass-through structure may include a strip-shaped flexible circuit board (FPC), or the electrical signal pass-through structure may include a strip-shaped printed circuit board (PCB). The electrical signal pass-through structure is disposed to include a flexible circuit board or a printed circuit board, so that the electrical signal pass-through structure and the box body can be sealed by using a gluing process. This reduces costs of a sealing process. A material of the flexible circuit board may include polyimide (PI) or liquid crystal polymer (LCP). A material of the printed circuit board may include polyimide or liquid crystal polymer. Because a moisture transmission rate of the polyimide or the liquid crystal polymer is low, the optical device can implement the moisture transmission rate less than 5 g/m²/day when the temperature is 50°C and the relative humidity is 100%, where g represents gram, m represents meter, and day represents day. During specific implementation, the electrical signal pass-through structure uses a plurality of layers of flexible circuit boards or printed circuit boards, and a glue-free hot-pressing process combination may be used between layers, to reduce a moisture transmission rate of the electrical signal pass-through structure.

In this embodiment of this application, the third adhesive may be disposed inside the box body, the third adhesive wraps a part of the electrical signal pass-through structure that is located inside the box body and that is close to the box body, and the third adhesive is bonded to the inner wall of the box body. Because content of moisture inside the box body is low, the third adhesive inside the box body is not easy to age. Therefore, the third adhesive is disposed at least inside the box body, so that gluing and sealing effect is better, and reliability of the optical device is high.

The optical device in this embodiment of this application may further include a fastener. The box body includes the side wall and the bottom cover. The electrical signal pass-through structure and the third adhesive that wraps the electrical signal pass-through structure are fastened between the fastener and the bottom cover. In this way, the third adhesive may be pressed tightly, so that the third adhesive is more firm, and the third adhesive is prevented from falling off. During specific implementation, screw holes may be disposed at two ends of the fastener, and a screw may pass through the screw hole and be fastened to the bottom cover, so that the electrical signal pass-through structure and the third adhesive are fastened between the fastener and the bottom cover.

In a possible implementation, the fastener may include a first fastening portion and a second fastening portion that are connected to each other. The first fastening portion and the bottom cover fasten the electrical signal pass-through structure and the third adhesive that wraps the electrical signal pass-through structure, and the second fastening portion is fastened and bonded to the third adhesive on the inner wall of the box body. An included angle between the first fastening portion and the second fastening portion may be a chamfer. In this way, a case in which the third adhesive cracks due to an excessively heavy stress because a stress that is of the third adhesive and that is at a position between the first fastening portion and the second fastening portion is excessively concentrated can be avoided. This improves reliability of the third adhesive. During specific implementation, an edge of the second via may also be chamfered, that is, an included angle between an inner wall of the second via and the inner wall of the box body is a chamfer; and/or an included angle between the second via and the outer wall of the box body is a chamfer. In this way, a case in which the third adhesive cracks due to an excessively heavy stress because a stress that is of the third adhesive and that is at the edge of the second via is excessively concentrated can be avoided. This further improves reliability of the third adhesive. The third adhesive is filled between the fastener, the inner wall of the box body, and the bottom cover of the box body, and the third adhesive is filled with the second via. The third adhesive is disposed in both the box body and the second via, so that gluing and sealing of the electrical signal pass-through structure is good. During specific implementation, to achieve better gluing and sealing effect, the third adhesive may also be disposed outside the box body.

During specific implementation, each of a glued connection position between the electrical signal pass-through structure and the box body and a position at which the third adhesive is exposed is provided with a protective film. The protective film protects the third adhesive, so that aging of the third adhesive can be avoided, and reliability of the third adhesive can be improved. In this way, the optical device can implement a moisture transmission rate less than 5 g/m²/day when the temperature is 50°C and the relative humidity is 100%, where g represents gram, m represents meter, and day represents day.

According to a second aspect, an embodiment of this application further provides an optical communication device. The optical communication device may be any device that has an optical signal receiving and sending function. The optical communication device may include any one of the foregoing optical devices, a circuit board, and a housing. The optical device is located on the circuit board, and the housing wraps the circuit board and the optical device. Because the foregoing optical device has a high integration level, the optical communication device including the optical device also has a high integration level. In addition, hermetic packaging may be performed on the optical device in a gluing and sealing manner, so that costs of the optical device are low, and therefore costs of the optical communication device including the optical device are also low.

According to a third aspect, an embodiment of this application further provides an optical switching system. The optical switching system may be a wavelength division optical cross connect (optical cross connect, OXC) system. The optical switching system may include a first optical communication device and a second optical communication device. The first optical communication device is any one of the foregoing optical communication devices. The second optical communication device exchanges optical information by using the first optical communication device. Because the optical communication device has a high integration level and low costs, the optical switching system including the optical communication device has a high integration level and low costs.

### BRIEF DESCRIPTION OF DRAWINGS

FIG. 1 is a schematic side view of a structure of an optical device according to an embodiment of this application;
FIG. 2 is a schematic top view of a structure of an optical substrate according to an embodiment of this application;
FIG. 3 is a schematic side view of a structure of an optical substrate corresponding to FIG. 2;
FIG. 4 is a schematic three-dimensional diagram of a structure of an optical substrate according to an embodiment of this application;
FIG. 5 is a schematic three-dimensional diagram of a structure of an optical device according to an embodiment of this application;
FIG. 6 is a schematic top view of a structure of an optical device according to an embodiment of this application;
FIG. 7 is another schematic side view of a structure of an optical device according to an embodiment of this application;
FIG. 8 is a schematic three-dimensional diagram of a structure of a box body according to an embodiment of this application;
FIG. 9 is a schematic diagram of a structure of a connection tube according to an embodiment of this application;
FIG. 10 is a schematic diagram of a cross section at a dashed line RR' in FIG. 9;
FIG. 11 is a schematic diagram of another structure of a connection tube according to an embodiment of this application;
FIG. 12 is a schematic diagram of another structure of a connection tube according to an embodiment of this application;
FIG. 13 is a schematic diagram of a cross section at a dashed line EE' in FIG. 12;
FIG. 14 is a schematic diagram of a structure of an optical signal pass-through structure according to an embodiment of this application;
FIG. 15 is a partial schematic diagram of an optical device according to an embodiment of this application; and
FIG. 16 is a schematic diagram of a cross section at a dashed line N' in FIG. 15.

### Reference numerals:

11: box body; 111: side wall; 112: bottom cover; 12: upper cover; 13: optical substrate; 14: optical element; 141: glue; 15: buffer member; 16: optical signal pass-through structure; 161: connection tube; 162: optical fiber; 1621: bare fiber; 1622: coating layer; 163: filling part; 17: electrical signal pass-through structure; 181: first adhesive; 182: second adhesive; 183: third adhesive; 191: first sensor; 192: second sensor; 20: chip; 21: fastener; 211: first fastening portion; 212: second fastening portion; 22: screw; Q: opening; U1: first concave structure; U2: second concave structure; T1: first via; T2: second via; G: desiccant; W: groove; P: hole; A: bare fiber area; B: coating area; and M: thinning area.

### DESCRIPTION OF EMBODIMENTS

To make the objectives, technical solutions, and advantages of this application clearer, the following further describes this application in detail with reference to the accompanying drawings.

It should be noted that same reference signs in the accompanying drawings of this application represent same or similar structures, and therefore repeated descriptions thereof are omitted. Expressions of positions and directions in this application are described by using the accompanying drawings as an example. However, changes may also be made as required, and all the changes fall within the protection scope of this application. The accompanying drawings in this application are merely used to illustrate relative position relationships and do not represent an actual scale.

To resolve a problem of a large thickness and low integration of an optical device, embodiments of this application provide an optical device, an optical communication device, and an optical switching system. For example, the optical device may be an optical wavelength selective switch (wavelength selective switch, WSS), and the optical wavelength selective switch may switch, to any output port, a signal of any wavelength input from an input port. The optical device may be applied to various types of optical communication devices, and the optical communication device may be any device that has an optical signal receiving and sending function. For example, the optical switching system may be a wavelength division optical cross connect (optical cross connect, OXC) system.

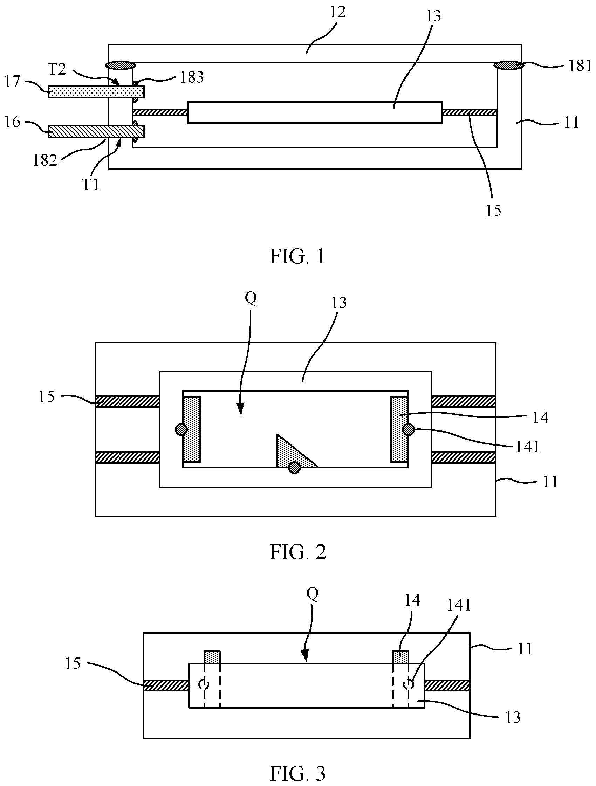

FIG. 1 is a schematic diagram of a structure of a side view of an optical device according to an embodiment of this application. FIG. 2 is a schematic diagram of a structure of a top view of an optical substrate according to an embodiment of this application. FIG. 3 is a schematic diagram of a structure of a side view of the optical substrate corresponding to FIG. 2. With reference to FIG. 1 to FIG. 3, the optical device provided in embodiments of this application may include a box body 11, an upper cover 12, and an optical substrate 13 and an optical element 14 that are located inside the box body 11. The optical substrate 13 has an opening Q that penetrates a thickness direction, and the optical element 14 is fastened to an inner wall of the opening Q.

In the optical device provided in embodiments of this application, the opening that penetrates the thickness direction is disposed in the optical substrate, and the optical element is fastened to the inner wall of the opening. In comparison with disposing the optical element on an upper surface of the optical substrate, a total thickness of the optical device can be greatly reduced, and an integration level of the optical device can be improved. In addition, the optical element is fastened to the inner wall of the opening, so that impact of deformation of the optical substrate on an optical path formed by the optical element can be reduced, and machining precision of the optical substrate can also be reduced, thereby reducing manufacturing costs of the optical substrate.

In a conventional technology, the optical element is usually disposed on the upper surface of the optical substrate. In this way, a total thickness of the optical substrate and the optical element is a sum of a thickness of the optical substrate and a height of the optical element. Consequently, the total thickness of the optical device is large. In embodiments of this application, refer to FIG. 2 and FIG. 3. The optical element 14 is fastened to the inner wall of the opening Q of the optical substrate 13, and both the upper surface and a lower surface of the optical substrate 13 are not provided with the optical element 14. In this way, the total thickness of the optical substrate 13 and the optical element 14 can be the thickness of the optical substrate 13 or the height of the optical element 14. Therefore, in comparison with the conventional technology in which the optical element is disposed on the upper surface of the optical substrate, height space inside the optical device can be reduced, and the total thickness of the optical device is greatly reduced. For example, the total thickness of the optical device may be reduced to be less than 18 mm.

During specific implementation, a side surface of the optical element 14 may be attached to the inner wall of the opening Q by using glue 141. Certainly, the optical element 14 may alternatively be fastened in another manner. This is not limited herein. The optical element 14 is fastened to the inner wall of the opening Q of the optical substrate 13, so that light can be transmitted in the opening Q of the optical substrate 13, and a loss of the light is small. In addition, deformation of the optical substrate 13 has small impact on the light, so that an optical path with high precision can be formed in the optical device. In actual application, the inner wall of the opening Q may be provided with one or more optical elements 14, and a quantity, shapes, sizes, or the like of optical elements 14 may be set based on an actual requirement. In addition, in FIG. 2, an example in which a shape of the opening Q is a rectangle is used for illustration. During specific implementation, the shape and a size of the opening Q may be set based on an actual optical path requirement. This is not limited herein.

Optionally, a material of the optical substrate 13 includes but is not limited to an aluminum silicon carbide (AlSiC) composite material, an aluminum nitride (AlN) ceramic, an aluminum oxide ceramic, a kovar (Kovar) alloy, an invar (Invar) alloy, or the like.

In a possible implementation, as shown in FIG. 2 and FIG. 3, the optical substrate 13 and the box body 11 may be disposed separately. That is, both the optical substrate 13 and the optical element 14 are located inside the box body 11. In this way, deformation caused by an external force on the optical substrate 13 can be reduced, and an optical path formed by the optical element is prevented from being affected by an external factor.

As shown in FIG. 3, the thickness of the optical substrate 13 may be less than or equal to the height of the optical element 14 in the thickness direction of the optical substrate 13. In this way, space of the inner wall of the opening Q can be fully used, so that an integration level of the optical device is high. Certainly, the thickness of the optical substrate 13 may alternatively be greater than a maximum height of the optical element 14 in the thickness direction of the optical substrate 13. This is not limited herein.

As shown in FIG. 2 and FIG. 3, to further reduce the impact of the external factor on the optical path, the side surface of the optical substrate 13 may be provided with a buffer member 15. The buffer member 15 may be supported between the optical substrate 13 and an inner wall of the box body 11, to perform a buffer function. In this way, an external factor, for example, a change of an air pressure or vibration does not cause an optical path offset on the optical substrate 13. The buffer member 15 is disposed on the side surface of the optical substrate 13, and the upper surface and a lower surface of the optical substrate 13 are not provided with the buffer member 15. Therefore, the buffer member 15 does not occupy thick space, and the thickness of the optical device can be further reduced. During specific implementation, the buffer member 15 may include a silicone pad. Certainly, the buffer member 15 may alternatively use another material having a buffer function. This is not limited herein.

To achieve good buffering effect, two opposite side surfaces of the optical substrate 13 may be provided with buffer members 15. For example, two opposite side surfaces that are of the optical substrate 13 and that have relatively small areas may be provided with the buffer members 15. For example, each of the two side surfaces may be provided with at least two buffer members 15. Certainly, one, three, or more side surfaces of the optical substrate 13 each may be provided with a buffer member 15, or one side surface may be provided with one, three, or more buffer members 15. A position of the buffer member and a quantity of buffer members 15 may be disposed based on an actual requirement. This is not limited herein.

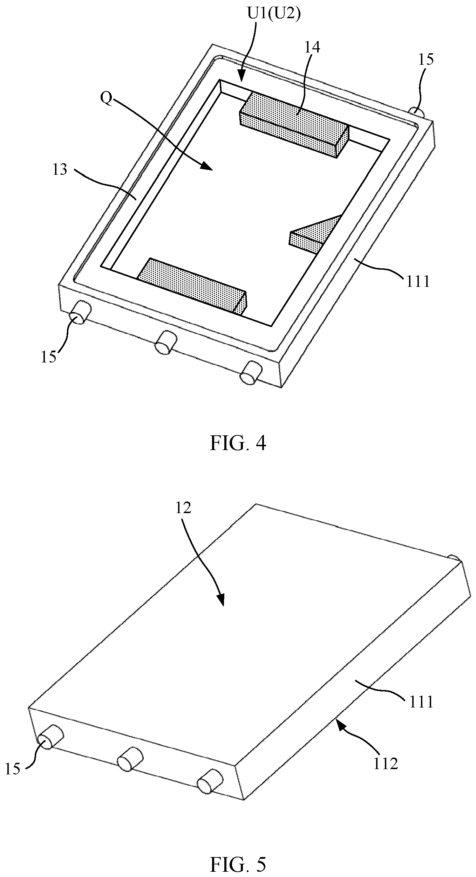

FIG. 4 is a schematic diagram of a three-dimensional structure of the optical substrate according to an embodiment of this application. FIG. 5 is a schematic diagram of a three-dimensional structure of the optical device according to an embodiment of this application. With reference to FIG. 4 and FIG. 5, in another possible implementation, the box body may include a side wall 111 and a bottom cover 112. The optical substrate 13 and the side wall 111 of the box body are of an integrated structure, that is, an outer wall of the optical substrate 13 is multiplexed as the side wall 111 of the box body. The optical substrate 13 is glued to the bottom cover 112 of the box body, and the optical substrate 13 is glued to the upper cover 12, so that a hermetic packaged optical device can be obtained. FIG. 4 is a schematic diagram in which the optical substrate 13 is not glued with the upper cover 12 and the bottom cover 112. After the optical substrate 13 is glued with the upper cover 12 and the bottom cover 112, the hermetic packaged optical device shown in FIG. 5 can be obtained. In a manufacturing process, the optical substrate 13 and the side wall 111 of the box body may be manufactured by using a same processing process and a same material, or another component in the optical device may be disposed in the opening Q of the optical substrate 13, and the upper cover 12 and the bottom cover 112 are glued on two sides of the optical substrate 13, so that the hermetic packaged optical device can be formed. The optical substrate 13 and the side wall 111 of the box body are of an integrated structure. This can further reduce the total thickness of the optical device, improve the integration level of the optical device, and reduce production costs of the optical device.

Still refer to FIG. 4 and FIG. 5. A height of the side wall 111 of the box body in the thickness direction of the optical substrate 13 is greater than the thickness of the optical substrate 13. For example, a figure shown in FIG. 4 is a surface of a side that is of the optical substrate and that is close to the upper cover. The surface of the side that is of the optical substrate 13 and that is close to the upper cover 12 and the side wall 111 may form a first concave structure U1, and the upper cover 12 may be embedded in the first concave structure U1. In this way, after the optical substrate 13 is glued with the upper cover 12, a surface of the upper cover 12 may be flush with an edge of the side wall 111, so that the upper surface of the optical device is an approximately flat surface. This improves the integration level of the optical device. In addition/Alteniatively, for example, a figure shown in FIG. 4 is a surface of a side that is of the optical substrate and that is close to the bottom cover. The surface of the side that is of the optical substrate 13 and that is close to the bottom cover 112 and the side wall 111 form a second concave structure U2, and the bottom cover 112 is embedded in the second concave structure U2. In this way, after the optical substrate 13 is glued with the bottom cover 112, a surface of the bottom cover 112 may be flush with an edge of the side wall 111, so that the lower surface of the optical device is an approximately flat surface. This improves the integration level of the optical device. In other words, only a surface of one side of the optical substrate 13 may be provided with a concave structure, and the upper cover 12 or the bottom cover 112 is embedded in the concave structure; or both surfaces of two sides of the optical substrate 13 may be provided with concave structures, and the upper cover 12 and the bottom cover 112 are respectively embedded in the concave structures. Disposing may be performed based on an actual requirement. This is not limited herein.

As shown in FIG. 4, during specific implementation, the thickness of the optical substrate 13 may be greater than or equal to the maximum height of the optical element 14 in the thickness direction of the optical substrate 13. In this way, the optical element 14 may not exceed the upper surface and the lower surface of the optical substrate 13, so that the optical substrate 13 is more easily glued to the upper cover 12 and the bottom cover 112. For example, a plate-like upper cover 12 and a plate-like bottom cover 112 may be used. Certainly, in some scenarios, a height of the optical element 14 may alternatively be greater than the thickness of the optical substrate 13. The upper cover 12 and/or the bottom cover 112 may be disposed in a hemispherical shape or the like, to accommodate the optical element 14 that exceeds a surface of the optical substrate 13.

In the embodiments shown in FIG. 4 and FIG. 5, a side surface of the optical substrate 13 may also be provided with the buffer member 15, and the buffer member 15 has a buffer function. In this way, the optical device is installed in the optical communication device, so that impact of another component in the optical communication device on the optical path of the optical substrate 13 can be prevented. For a specific implementation of the buffer member in the embodiments shown in FIG. 4 and FIG. 5, refer to the specific implementation of the buffer member in the embodiments shown in FIG. 2 and FIG. 3. Details are not described again.

As shown in FIG. 1, to implement an optical signal transmission function and an electrical signal transmission function, the optical device provided in embodiments of this application may further include an optical signal pass-through structure 16 and an electrical signal pass-through structure 17. The side wall of the box body 11 is provided with a first via T1 and a second via T2 that pass through the box body 11, the optical signal pass-through structure 16 passes through the first via T1, and the electrical signal pass-through structure 17 passes through the second via T2. To enable a component, for example, the optical element, in the optical device to work in an environment with stable moisture and gas density, the box body 11 and the upper cover 12, the optical signal pass-through structure 16 and the first via T1, and the electrical signal pass-through structure 17 and the second via T2 need to be separately sealed, to implement hermetic packaging of the optical device.

During specific implementation, the box body 11 and the upper cover 12 may be glued and sealed by using an adhesive, the optical signal pass-through structure 16 and the box body 11 may be glued and sealed by using an adhesive, and the electrical signal pass-through structure 17 and the box body 11 may be glued and sealed by using an adhesive. A material of the adhesive may include epoxy resin. Certainly, the adhesive may alternatively use another material. This is not limited herein. For ease of differentiation, in embodiments of this application, the adhesive for sealing the box body 11 and the upper cover 12 is referred to as a first adhesive 181, the adhesive for sealing optical signal pass-through structure 16 and the box body 11 is referred to as a second adhesive 182, and the adhesive for sealing the electrical signal pass-through structure 17 and the box body 11 is referred to as a third adhesive 183. To prevent the adhesive from aging, the optical device may further include a protective film covering at least a part of the adhesive.

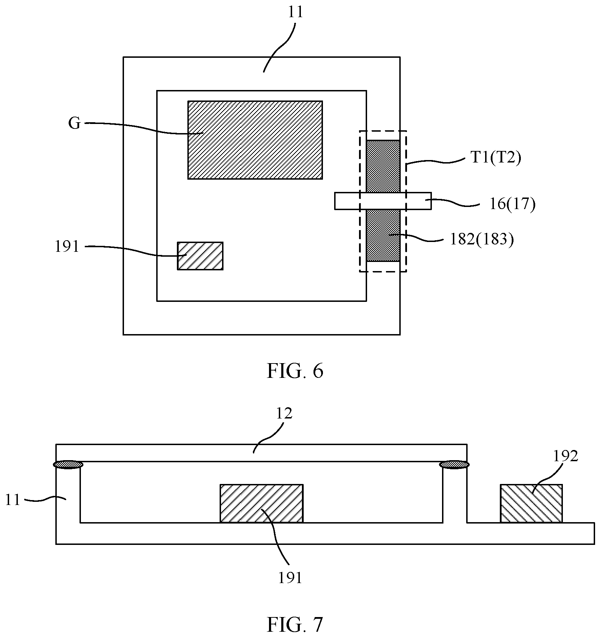

FIG. 6 is a schematic diagram of a top view structure of the optical device according to an embodiment of this application. As shown in FIG. 6, to make moisture content inside the optical device relatively stable, a desiccant G may be disposed inside the box body 11, and the desiccant G may absorb water molecules, to perform a dehumidification function. A quantity of desiccants G is legitimately set, so that the moisture content inside the optical device may be relatively stable. In embodiments of this application, hermetic packaging is performed on the optical device by using an adhesive, and the desiccant G is disposed in the box body, so that the optical device can meet an industry standard of keeping moisture less than 5000 ppm within 15 years.

FIG. 7 is a schematic diagram of another side view structure of the optical device according to an embodiment of this application. As shown in FIG. 7, the optical device in embodiments of this application may further include a first sensor 191 located inside the box body 11 and a second sensor 192 located outside the box body 11. The first sensor 191 is configured to detect a temperature, humidity, and atmospheric pressure inside the box body 11, and output a first detection signal. The second sensor 192 is configured to detect a temperature, humidity, and atmospheric pressure outside the box body 11, and output a second detection signal. By disposing the first sensor 191 and the second sensor 192, the temperature, the humidity, and the atmospheric pressure inside and outside the box body 11 may be monitored in real time. During specific implementation, a processor may be disposed inside or outside the box body 11. The processor may receive the first detection signal and the second detection signal, determine and output a life model curve based on the first detection signal and the second detection signal, and subsequently display, onto an external display device, the life model curve or life warning information obtained based on the life model curve, so that a user can learn a usage status of the optical device based on the display device, and monitor a life of the optical device in real time, for example, learn the life warning information at least 20 months in advance. In this way, reliability of the optical device is improved. In addition, operations such as electric control drying, moisture elimination, frequency compensation, or wavelength deviation may be performed based on the temperature, the humidity, and the atmospheric pressure inside and outside the box body, to make performance of the optical device stable.

Refer to FIG. 1. In embodiments of this application, the box body 11 and the upper cover 12 may be glued and sealed by using the first adhesive 181. In a possible implementation, the side wall and the bottom cover of the box body 11 may be of an integrated structure. In another possible implementation, the side wall and the bottom cover of the box body 11 may be disposed separately, and the side wall and the bottom cover of the box body 11 may be glued and sealed by using an adhesive. Because requirements of a glued sealing process on the box body 11 and the upper cover 12 are low, each of the box body 11 and the upper cover 12 may be made of a low-cost material. For example, each of the box body 11 and the upper cover 12 may be made of a metal material, for example, stainless steel or aluminum, or each of the box body 11 and the upper cover 12 may be made of a non-metal material, for example, plastic. In addition, costs of the gluing and sealing process are low. Therefore, material costs and process costs of the optical device can be greatly reduced. In addition, each of a glued connection position between the box body 11 and the upper cover 12 and a position at which the first adhesive 181 is exposed is provided with a protective film (not shown in the figure). The protective film protects the first adhesive 181, so that the first adhesive 181 can be prevented from aging, reliability of the first adhesive 181 can be improved, and the optical device can implement a moisture transmission rate less than 5 g/m²/day when a temperature is 50° and relative humidity is 100%, where g represents gram, and m represents meter, day represents day. During specific implementation, the protective film may be a vacuum coating film made of an organic material or an inorganic material. For example, the protective film may be made by using a plasma enhanced chemical vapor deposition (PECVD) process. A material of the protective film may be a highly compact organic or inorganic polymer. For example, the material of the protective film may be a non-metal material, for example, parylene (Parylene). Certainly, the material of the protective film may alternatively be a metal material. This is not limited herein.

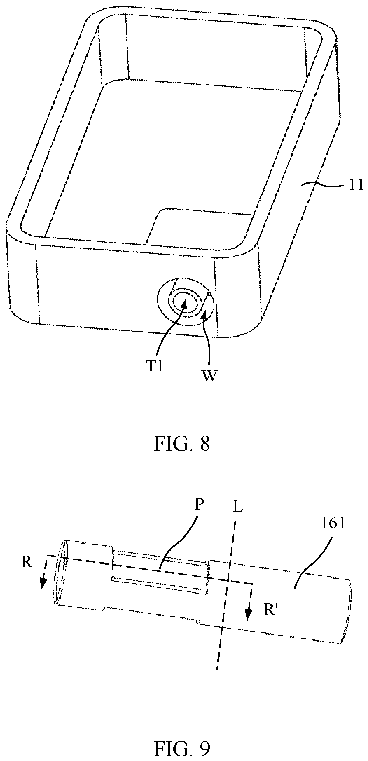

FIG. 8 is a schematic diagram of a three-dimensional structure of the box body according to an embodiment of this application. FIG. 9 is a schematic diagram of a structure of a connection tube according to an embodiment of this application. With reference to FIG. 8 and FIG. 9, the optical signal pass-through structure may include a connection tube 161 and an optical fiber (which is not shown in the figure) that passes through the connection tube 161. The connection tube 161 passes through the first via T1. The box body 11 is provided with a groove W at a position corresponding to the first via T1, and the groove W surrounds the first via T1. In addition, the groove W is located on the inner wall and/or the outer wall of the box body 11. If no groove W is disposed around the first via T1, a stress of the box body 11 is directly applied to the connection tube 161, and the optical fiber in the connection tube 161 is easily damaged. In embodiments of this application, the groove W surrounding the first via T1 is disposed, so that the groove W can prevent the stress of the box body 11 from directly applying to the connection tube 161. This avoids damage to the optical fiber in the connection tube 161 due to an excessively large stress.

Still refer to FIG. 8 and FIG. 9. A part of the connection tube 161 is located inside the first via T1, and the other part of the connection tube 161 is located inside the box body 11. For example, in FIG. 9, a part of the connection tube 161 on the right of a dashed line L is located inside the first via T1, and a part of the connection tube 161 on the left of the dashed line L is located inside the box body 11. A part that is of the connection tube 161 and that is located inside the box body 11 is provided with a hole P. In a high temperature process, the optical fiber inside the connection tube 161 is damaged due to a tensile stress. This easily causes the optical fiber to be broken. In embodiments of this application, the hole P is disposed on the part that is of the connection tube 161 and that is located inside the box body 11, so that the tensile stress of the optical fiber inside the connection tube 161 can be reduced, a risk of optical fiber break is reduced, and reliability of the optical signal pass-through structure is improved.

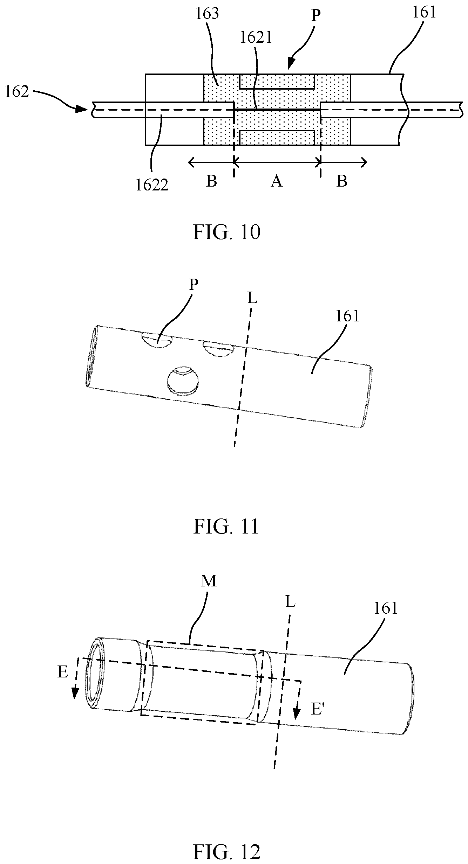

FIG. 10 is a schematic diagram of a cross sectional at a dashed line RR in FIG. 9. With reference to FIG. 9 and FIG. 10, an optical fiber 162 may include a bare fiber 1621 and a coating layer 1622. The optical fiber 162 has a bare fiber area A and a coating area B, a position of the bare fiber area A corresponds to a position of the hole P, the coating layer 1622 wraps the bare fiber 1621 in the coating area B, and the bare fiber 1621 in the bare fiber area A is not wrapped by the coating layer 1622. That is, the optical fiber 162 in the bare fiber area A is a bare fiber, and the optical fiber in the coating area B is a non-bare fiber. The optical signal pass-through structure may further include a filling portion 163. The filling portion 163 is filled between the optical fiber 162 and the connection tube 161, and the filling portion 163 wraps the bare fiber area A and a part that is of the optical fiber 162 and that is in the coating area B adjacent to the bare fiber area A.

In actual application, the coating layer 1622 in the optical fiber 162 may transmit moisture. To avoid a case in which hermetic packaging effect of the optical device is affected because the coating layer 1622 transmits moisture to the inside of the box body through the hole P, in embodiments of this application, the bare fiber area A is disposed at the corresponding position of the hole P, and the optical fiber 162 in the bare fiber area A is not wrapped by the coating layer 1622, so that the coating layer 1622 is partitioned in the bare fiber area A. Therefore, a moisture transmission path of the coating layer 1622 can be isolated. In addition, the filling portion 163 filled between the optical fiber 162 and the connection tube 161 is disposed, so that the filling portion 163 wraps the bare fiber area A of the optical fiber 162, and the filling portion 163 wraps a part that is of the optical fiber 162 and that is in the coating area B adjacent to two sides of the bare fiber area A. In this way, a path for transmitting moisture by the coating layer 1622 to the box body through the hole P can be blocked, and hermetic packaging effect of the optical device is effectively improved. In other words, the optical signal pass-through structure in embodiments of this application can reduce the tensile stress of the optical fiber 162 in the connection tube 161 and improve reliability of the optical signal pass-through structure without affecting hermetic packaging effect of the optical device. During specific implementation, the filling portion 163 may include solder or glue. Certainly, the filling portion 163 may alternatively use another material that has a function of blocking moisture. This is not limited herein. In addition, to fasten the filling portion 163 at the hole P, a high-temperature tape may be attached to a position that is on an outer side of the connection tube 161 and that corresponds to the hole P.

To achieve better hermetic packaging effect of the optical device, a length of the bare fiber area A in an extension direction of the optical fiber 162 may be set to be greater than a length of the hole P in the extension direction of the optical fiber 162. In this way, a length of the coating layer 1622 is long, and a distance between a cross section of the coating layer 1622 and the hole P is longer, so that the coating layer 1622 is more difficult to transmit moisture to the inside of the box body through the hole P. To enable the optical signal pass-through structure to have good effect of blocking moisture, the length of the bare fiber area A in the extension direction of the optical fiber 162 may be set to be greater than 8 mm. The length of the bare fiber area A in the extension direction of the optical fiber 162 is set to be at least 2 mm greater than the length of the hole P in the extension direction of the optical fiber 162. Certainly, during specific implementation, the length of the bare fiber area A in the extension direction of the optical fiber 162 may alternatively be equal to or slightly less than the length of the hole P in the extension direction of the optical fiber 162. This is not limited herein.

As shown in FIG. 9, in a possible implementation, the hole P in the connection tube 161 may be a rectangle, and two holes P may be disposed in the connection tube 161. Alternatively, FIG. 11 is another schematic diagram of the structure of the connection tube according to an embodiment of this application. In another possible implementation, the hole P in the connection tube 161 may alternatively be a circle, and six holes P may be disposed in the connection tube 161. Certainly, during specific implementation, a shape of the hole P in the connection tube 161 may be set based on an actual requirement. For example, the shape of the hole P may alternatively be an ellipse or a square. Alternatively, a quantity of holes P in the connection tube 161 may be set based on an actual requirement. For example, the quantity of holes P may be one, two, or more. The shape of the hole P and the quantity of holes P in the connection tube 161 are not limited herein.

FIG. 12 is a schematic diagram of another structure of the connection tube according to an embodiment of this application. As shown in FIG. 8 and FIG. 12, based on a similar principle, to reduce a tensile stress of an optical fiber inside the connection tube 161, the connection tube 161 may be partially thinned, so that the connection tube 161 has a thinning area M located inside the box body 11, and a diameter of the connection tube 161 in the thinning area M is less than a diameter of the connection tube 161 in another area other than the thinning area M.

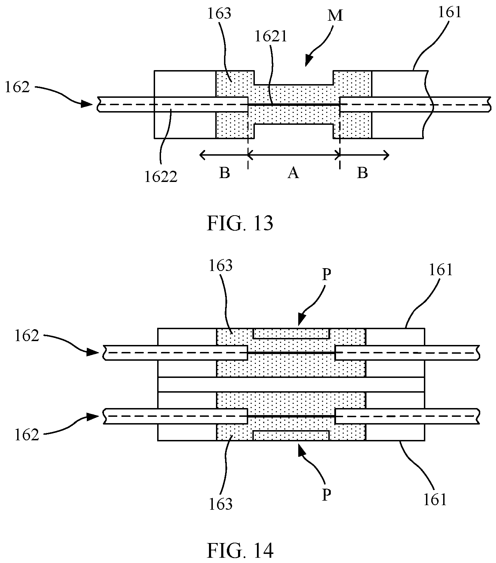

FIG. 13 is a schematic diagram of a cross section at a dashed line EE' in FIG. 12. With reference to FIG. 12 and FIG. 13, the optical fiber 162 may include a bare fiber 1621 and a coating layer 1622. An optical fiber 162 has a bare fiber area A and a coating area B, a location of the bare fiber area A corresponds to a location of the thinning area M, the coating layer 1622 wraps the bare fiber 1621 in the coating area B, and the bare fiber 1621 in the bare fiber area A is not wrapped by the coating layer 1622. The optical signal pass-through structure may further include a filling portion 163. The filling portion 163 is filled between the optical fiber 162 and the connection tube 161, and the filling portion 163 wraps the bare fiber area A and a part that is of the optical fiber and that is in the coating area B adjacent to the bare fiber area A. The optical signal pass-through structure shown in FIG. 12 and FIG. 13 may also reduce the tensile stress of the optical fiber 162 in the connection tube 161 and improve reliability of the optical signal pass-through structure without affecting hermetic packaging effect of the optical device. A specific principle is similar to the principles of the embodiments shown in FIG. 9 and FIG. 10. Details are not repeated.

The optical signal pass-through structure shown in FIG. 9 to FIG. 13 is a single-tube structure. That is, the optical signal pass-through structure may include only one connection tube. FIG. 14 is a schematic diagram of a structure of the optical signal pass-through structure according to an embodiment of this application. As shown in FIG. 14, the optical signal pass-through structure in embodiments of this application may alternatively be a dual-tube structure. That is, the optical signal pass-through structure may include two connection tubes 161, and the two connection tubes 161 in the optical signal pass-through structure may be of an integrated structure. Alternatively, the optical signal pass-through structure in embodiments of this application may be of a multi-tube integrated structure. That is, the optical signal pass-through structure may include at least three connection tubes, and the connection tubes in the optical signal pass-through structure may be of an integrated structure. During specific implementation, a quantity of connection tubes in the optical signal pass-through structure may be set based on an actual requirement. This is not limited herein.

Refer to FIG. 1. In embodiments of this application, the optical signal pass-through structure 16 and the box body 11 are glued and sealed by using the second adhesive 182. The second adhesive 182 may be disposed inside the box body 11, the second adhesive 182 wraps a part of the optical signal pass-through structure 16 that is located inside the box body 11 and that is close to the box body 11, and the second adhesive 182 is bonded to the inner wall of the box body 11. Because content of moisture inside the box body 11 is low, the second adhesive 182 inside the box body 11 is not easy to age. Therefore, the second adhesive 182 is disposed inside the box body 11, so that gluing and sealing effect is better, and reliability of the optical device is high. To achieve better gluing and sealing effect, the second adhesive 182 may also be disposed outside the box body 11 and/or inside the first via T1.

Because a gluing and sealing process has a low requirement on the connection tube, the connection tube may be made of a low-cost material. For example, the connection tube may be made of a low-cost metal material, for example, copper. In addition, costs of the gluing and sealing process are low, so that material costs and process costs of the optical device can be greatly reduced. In addition, each of a glued connection position between the optical signal pass-through structure and the box body and a position at which the second adhesive is exposed is provided with a protective film. The protective film protects the second adhesive, so that aging of the second adhesive can be avoided, and reliability of the second adhesive can be improved. In this way, the optical device can implement a moisture transmission rate less than 5 g/m²/day when a temperature is 50°C and relative humidity is 100%, where g represents gram, m represents meter, and day represents day. During specific implementation, the protective film may be a vacuum coating film made of an organic material or an inorganic material. For example, the protective film may be made by using a plasma enhanced chemical vapor deposition (PECVD) process. A material of the protective film may be a highly compact organic or inorganic polymer. For example, the material of the protective film may be a non-metal material, for example, parylene (Parylene). Certainly, the material of the protective film may alternatively be a metal material. This is not limited herein.

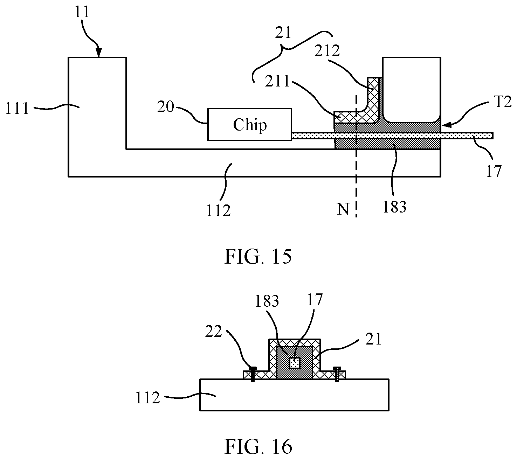

FIG. 15 is a partial schematic diagram of the optical device according to an embodiment of this application. As shown in FIG. 15, the electrical signal pass-through structure 17 passes through the second via T2, the electrical signal pass-through structure 17 may be electrically connected to a chip 20 inside the box body 11, and the electrical signal pass-through structure 17 and the box body 11 are glued and sealed by using a third adhesive 183. The electrical signal pass-through structure 17 may include a strip-shaped flexible circuit board (FPC), or the electrical signal pass-through structure 17 may include a strip-shaped printed circuit board (PCB). The electrical signal pass-through structure is disposed to include a flexible circuit board or a printed circuit board, so that the electrical signal pass-through structure 17 and the box body 11 can be sealed by using a gluing process. This reduces costs of a sealing process. A material of the flexible circuit board may include polyimide (PI) or liquid crystal polymer (LCP). A material of the printed circuit board may include polyimide or liquid crystal polymer. Because a moisture transmission rate of the polyimide or the liquid crystal polymer is low, the optical device can implement the moisture transmission rate less than 5 g/m²/day when the temperature is 50°C and the relative humidity is 100%, where g represents gram, m represents meter, and day represents day. During specific implementation, the electrical signal pass-through structure uses a plurality of layers of flexible circuit boards or printed circuit boards, and a glue-free hot-pressing process combination may be used between layers, to reduce a moisture transmission rate of the electrical signal pass-through structure.

Still refer to FIG. 15. In embodiments of this application, the third adhesive 183 may be disposed inside the box body 11, the third adhesive 183 wraps a part of the electrical signal pass-through structure 17 that is located inside the box body 11 and that is close to the box body 11, and the third adhesive 183 is bonded to the inner wall of the box body 11. Because content of moisture inside the box body 11 is low, the third adhesive 183 inside the box body 11 is not easy to age. Therefore, the third adhesive 183 is disposed at least inside the box body 11, so that gluing and sealing effect is better, and reliability of the optical device is high.

FIG. 16 is a schematic diagram of a cross section at a dashed line N in FIG. 15. With reference to FIG. 15 and FIG. 16, the optical device in embodiments of this application may further include a fastener 21. The box body includes the side wall 111 and the bottom cover 112. The electrical signal pass-through structure 17 and the third adhesive 183 that wraps the electrical signal pass-through structure 17 are fastened between the fastener 21 and the bottom cover 112. In this way, the third adhesive 183 may be pressed tightly, so that the third adhesive 183 is more firm, and the third adhesive 183 is prevented from falling off. During specific implementation, screw holes may be disposed at two ends of the fastener 21, and a screw 22 may pass through the screw hole and be fastened to the bottom cover 112, so that the electrical signal pass-through structure 17 and the third adhesive 183 are fastened between the fastener 21 and the bottom cover 112.

In a possible implementation, the fastener 21 may include a first fastening portion 211 and a second fastening portion 212 that are connected to each other. The first fastening portion 211 and the bottom cover 112 fasten the electrical signal pass-through structure 17 and the third adhesive 183 that wraps the electrical signal pass-through structure 17, and the second fastening portion 212 is fastened and bonded to the third adhesive 183 on the inner wall of the box body. An included angle between the first fastening portion 211 and the second fastening portion 212 may be a chamfer. In this way, a case in which the third adhesive 183 cracks due to an excessively heavy stress because a stress that is of the third adhesive 183 and that is at a position between the first fastening portion 211 and the second fastening portion 212 is excessively concentrated can be avoided. This improves reliability of the third adhesive 183. During specific implementation, an edge of the second via T2 may also be chamfered, that is, an included angle between an inner wall of the second via T2 and the inner wall of the box body is a chamfer; and/or an included angle between the second via T2 and the outer wall of the box body is a chamfer. In this way, a case in which the third adhesive 183 cracks due to an excessively heavy stress because a stress that is of the third adhesive 183 and that is at the edge of the second via T2 is excessively concentrated can be avoided. This further improves reliability of the third adhesive 183. The third adhesive 183 is filled between the fastener 21, the inner wall of the box body, and the bottom cover 112 of the box body, and the third adhesive 183 is filled with the second via T2. The third adhesive 183 is disposed in both the box body and the second via T2, so that gluing and sealing effect of the electrical signal pass-through structure is good. During specific implementation, to achieve better gluing and sealing effect, the third adhesive 183 may also be disposed outside the box body.

During specific implementation, each of a glued connection position between the electrical signal pass-through structure and the box body and a position at which the third adhesive is exposed is provided with a protective film. The protective film protects the third adhesive, so that aging of the third adhesive can be avoided, and reliability of the third adhesive can be improved. In this way, the optical device can implement a moisture transmission rate less than 5 g/m²/day when the temperature is 50°C and the relative humidity is 100%, where g represents gram, m represents meter, and day represents day. During specific implementation, the protective film may be a vacuum coating film made of an organic material or an inorganic material. For example, the protective film may be made by using a plasma enhanced chemical vapor deposition (PECVD) process. A material of the protective film may be a highly compact organic or inorganic polymer. For example, the material of the protective film may be a non-metal material, for example, parylene (Parylene). Certainly, the material of the protective film may alternatively be a metal material. This is not limited herein.

Based on a same technical concept, an embodiment of this application further provides an optical communication device. The optical communication device may be any device that has an optical signal receiving and sending function. The optical communication device may include any one of the foregoing optical devices, a circuit board, and a housing. The optical device is located on the circuit board, and the housing wraps the circuit board and the optical device. Because the foregoing optical device has a high integration level, the optical communication device including the optical device also has a high integration level. In addition, hermetic packaging may be performed on the optical device in a gluing and sealing manner, so that costs of the optical device are low, and therefore costs of the optical communication device including the optical device are also low.

Based on a same technical concept, an embodiment of this application further provides an optical switching system. The optical switching system may be a wavelength division multiplexing (optical cross connect, OXC) system. The optical switching system may include a first optical communication device and a second optical communication device. The first optical communication device is any one of the foregoing optical communication devices. The second optical communication device exchanges optical information by using the first optical communication device. Because the optical communication device has a high integration level and low costs, the optical switching system including the optical communication device has a high integration level and low costs.

Although some preferred embodiments of this application have been described, persons skilled in the art can make changes and modifications to these embodiments once they learn the basic inventive concept. Therefore, the following claims are intended to be construed as to cover the preferred embodiments and all changes and modifications falling within the scope of this application.

Clearly, persons skilled in the art can make various modifications and variations to embodiments of this application without departing from the spirit and scope of embodiments of this application. This application is intended to cover these modifications and variations provided that they fall within the scope of protection defined by the following claims and their equivalent technologies.

## Claims

1. An optical device, comprising: a box body, an upper cover, and an optical substrate and an optical element located inside the box body, wherein
the optical substrate has an opening that penetrates a thickness direction, and the optical element is fastened to an inner wall of the opening.

2. The optical device according to claim 1, wherein the box body comprises a side wall and a bottom cover; and
the optical substrate and the side wall of the box body are of an integrated structure, the optical substrate and the bottom cover of the box body are glued, and the optical substrate and the upper cover are glued.

3. The optical device according to claim 2, wherein a height of the side wall in the thickness direction of the optical substrate is greater than a thickness of the optical substrate; and
a surface of a side that is of the optical substrate and that is close to the upper cover forms a first concave structure with the side wall, and the upper cover is embedded in the first concave structure; and/or a surface of a side that is of the optical substrate and that is close to the bottom cover forms a second concave structure with the side wall, and the bottom cover is embedded in the second concave structure.

4. The optical device according to claim 2 or 3, wherein the thickness of the optical substrate is greater than or equal to a maximum height of the optical element in the thickness direction of the optical substrate.

5. The optical device according to any one of claims 1 to 4, further comprising a first sensor located inside the box body, and a second sensor located outside the box body, wherein
the first sensor is configured to detect a temperature, humidity, and atmospheric pressure inside the box body, and output a first detection signal; and
the second sensor is configured to detect a temperature, humidity, and atmospheric pressure outside the box body, and output a second detection signal.

6. The optical device according to any one of claims 1 to 5, further comprising an optical signal pass-through structure, wherein
the side wall of the box body is provided with a first via that penetrates the box body;
the optical signal pass-through structure comprises a connection tube and an optical fiber that passes through the connection tube, wherein the connection tube passes through the first via; and
the box body is provided with a groove at a position corresponding to the first via, the groove surrounds the first via, and the groove is located on an inner wall and/or an outer wall of the box body.

7. The optical device according to claim 6, wherein a part of the connection tube is located inside the first via, and the other part is located inside the box body;
the part of the connection tube located inside the box body is provided with a hole;
the optical fiber comprises a bare fiber and a coating layer, the optical fiber has a bare fiber area and a coating area, a position of the bare fiber area corresponds to a position of the hole, the coating layer wraps the bare fiber in the coating area, and the bare fiber in the bare fiber area is not wrapped by the coating layer; and
the optical signal pass-through structure further comprises a filling portion, wherein the filling portion is filled between the optical fiber and the connection tube, and the filling portion wraps the bare fiber area and a part that is of the optical fiber and that is in the coating area adjacent to the bare fiber area.

8. The optical device according to claim 6, wherein a part of the connection tube is located inside the first via, and the other part is located inside the box body;
the connection tube has a thinning area located inside the box body, and a diameter of the connection tube in the thinning area is less than a diameter of the connection tube in another area other than the thinning area;
the optical fiber comprises a bare fiber and a coating layer, the optical fiber has a bare fiber area and a coating area, a position of the bare fiber area corresponds to a position of the thinning area, the coating layer wraps the bare fiber in the coating area, and the bare fiber in the bare fiber area is not wrapped by the coating layer; and
the optical signal pass-through structure further comprises a filling portion, wherein the filling portion is filled between the optical fiber and the connection tube, and the filling portion wraps the bare fiber area and a part that is of the optical fiber and that is in the coating area adjacent to the bare fiber area.

9. The optical device according to any one of claims 6 to 8, wherein the optical signal pass-through structure and the box body are glued and sealed by using an adhesive.

10. The optical device according to any one of claims 1 to 9, further comprising an electrical signal pass-through structure, wherein
the side wall of the box body is provided with a second via that penetrates the box body;
the electrical signal pass-through structure comprises a strip-shaped flexible circuit board, or the electrical signal pass-through structure comprises a strip-shaped printed circuit board; and
the electrical signal pass-through structure passes through the second via, and the electrical signal pass-through structure and the box body are glued and sealed by using the adhesive.

11. The optical device according to claim 10, further comprising a fastener located inside the box body;
the box body comprises the side wall and the bottom cover;
the adhesive wraps a part of the electrical signal pass-through structure that is located inside the box body and that is close to the box body, and the adhesive is bonded to the inner wall of the box body; and
the electrical signal pass-through structure and the adhesive that wraps the electrical signal pass-through structure are fastened between the fastener and the bottom cover.

12. The optical device according to claim 11, wherein the fastener comprises a first fastening portion and a second fastening portion that are connected to each other;
the first fastening portion and the bottom cover fasten the electrical signal pass-through structure and the adhesive that wraps the electrical signal pass-through structure, and the second fastening portion is fastened and bonded to the adhesive on the inner wall of the box body;
an included angle between the first fastening portion and the second fastening portion is a chamfer;
an included angle between an inner wall of the second via and the inner wall of the box body is a chamfer, and/or an included angle between the second via and the outer wall of the box body is a chamfer; and
the adhesive is filled between the fastener, the inner wall of the box body, and the bottom cover of the box body, and the adhesive fills the second via.

13. The optical device according to any one of claims 10 to 12, wherein a material of the flexible circuit board comprises polyimide or liquid crystal polymer; and a material of the printed circuit board comprises polyimide or liquid crystal polymer.

14. The optical device according to any one of claims 1 to 13, wherein the box body and the upper cover are glued and sealed by using the adhesive.

15. The optical device according to claim 9, 10, or 14, further comprising a protective film that covers at least a part of the adhesive;
a material of the adhesive comprises epoxy resin; and
the protective film is a vacuum coating film made of an organic material or an inorganic material.

16. An optical communication device, wherein the optical communication device comprises the optical device according to any one of claims 1 to 15, a circuit board, and a housing, wherein the optical device is located on the circuit board, and the housing wraps the circuit board and the optical device.

17. An optical switching system, comprising a first optical communication device and a second optical communication device, wherein the first optical communication device is the optical communication device according to claim 16, and the second optical communication device exchanges optical information by using the first optical communication device.
